Europäisches Patentamt

European Patent Office

Office européen des brevets

(11) Publication number: **0 059 347**
**B1**

(12) **EUROPEAN PATENT SPECIFICATION**

(45) Date of publication of patent specification: **14.05.86**

(21) Application number: **82100979.2**

(22) Date of filing: **10.02.82**

(51) Int. Cl.⁴: **F 25 B 9/00, F 01 B 23/10, F 16 H 1/20**

(54) Power absorbing device.

(30) Priority: **27.02.81 JP 28223/81**

(43) Date of publication of application:
**08.09.82 Bulletin 82/36**

(45) Publication of the grant of the patent:
**14.05.86 Bulletin 86/20**

(84) Designated Contracting States:
**CH DE FR GB LI NL**

(56) References cited:
**DE-A-2 951 446**
**DE-B-1 004 929**
**FR-A- 923 521**
**GB-A-1 221 190**
**US-A-1 804 440**
**US-A-2 763 160**

(73) Proprietor: **Kabushiki Kaisha Toshiba**
**72, Horikawa-cho Saiwai-ku**
**Kawasaki-shi Kanagawa-ken 210 (JP)**

(72) Inventor: **Nakaya, Shunichi**
**406 Mukogaokayuen-haidensu 5-8-9, Nagao**
**Tama-ku Kawasaki-shi (JP)**
Inventor: **Araoka, Katsumasa**
**240 Sanmai-cho**
**Kanagawa-ku Yokohama-shi (JP)**

(74) Representative: **Henkel, Feiler, Hänzel & Partner**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a power absorbing device for absorbing output power in a reciprocating adiabatic expansion engine, comprising:

a cylindrical cam which is connected through coupling rods to a plurality of parallel pistons of the engine and rotates by the reciprocating motion of the pistons, the rotation axis of said cylindrical cam being substantially parallel to the direction of the reciprocating motion of the pistons, said cylindrical cam having on its outer periphery a swash plate engaging with the coupling rods;

bearing means for rotatably supporting said cylindrical cam;

a speed-increasing gear coupled with said cylindrical cam and having an output shaft which is rotated at a higher speed than said cylindrical cam, the output shaft extending in substantially a coaxial manner relative to said cylindrical cam; and

a power generator having a rotor which is attached to the output shaft and generates a rotating magnetic field and coil means which interlink with the magnetic field and generate electric power.

A power absorbing device of this type used for a reciprocating adiabatic expansion engine is known from DE—A—2 951 446.

By way of example, liquid helium is used as a refrigerant for the aforementioned low-temperature refrigerating machine. The refrigerant is cooled by adiabatic expansion in the adiabatic expansion engine, and mechanical output or energy equivalent to the amount of heat removed is led out of the refrigerating machine through the pistons of the engine. The refrigerating machine will not be able to enjoy uniform and stable operation unless the mechanical energy is absorbed by any means. The refrigerating machine of this type must, therefore, be provided with a power absorbing device for absorbing the energy of reciprocating motion of the pistons. In the known device, reciprocating motion of the pistons is converted into rotary motion to rotate a flywheel, and the flywheel is used as a rotor of an electrical generator in order to convert the energy of the rotatory motion into electrical power, which is used for operating other equipment or dissipated as Joule heat. The pistons move at a relatively low speed and the resultant rotatory motion is slow. This would lead to an increase in size of the refrigerating machine, however, in order to eliminate such awkwardness, the known device uses a speed-increasing gear which increases the speed of the rotatory motion obtained from the reciprocating motion of the pistons, thereby rotating the power absorbing device at high speed. In the known engine, a plurality of cylinder-piston devices are disposed coaxially with respect to the cylindrical cam which converts the reciprocating motion into rotary motion. They occupy a comparatively wide space. Therefore, the outer diameter of the cylindrical cam is generally large. However, only a shaft and a bearing for supporting one end of the shaft are provided inside the cylindrical cam, whereas the speed-increasing gear and the electric generator are arranged outside the cam in the direction of the shaft. For this reason, the device known from DE—A—2 951 446 is relatively large-sized, thus failing to provide a compact refrigerating machine.

From US—A—1 804 440 a swash plate mechanism is known, with the swash plate being associated with or formed or mounted in a housing. Gearing for transmitting the rotary motion of the swash plate to a driven shaft is disposed within the housing. One of the gear elements is connected to and is driven by the swash plate and the housing and other gearing is disposed within the housing and is driven by the gear elements and in turn drives the shaft. However, this mechanism has no means for absorbing the energy transmitted. Accordingly, there is a continued demand for the development of compact low-temperature refrigerating machines with power absorbing devices.

The object of this invention is to provide a power absorbing device which is reduced in size and capable of absorbing the mechanical power produced by pistons of a reciprocating adiabatic expansion engine of a low-temperature refrigerating machine after converting the power into electric energy.

In order to attain the above object, the power absorbing device of this invention is characterized in that the cylindrical cam comprises a cylindrical hollow space formed substantially coaxial with said cam, the speed-increasing gear being arranged in said hollow space;

said bearing means is attached to the housing of the engine and extends coaxially with said cylindrical cam in the same direction in which the coupling rods extend from the engine, said bearing means being comprised of a shaft body having an end portion at the end opposed to the housing and bearings fitted on the shaft body; the end region of the hollow space of said cam opposed to the housing is closed by an end face of said cylindrical cam, and the end region of the hollow space of said cam facing the housing is open, whereby said bearing means can be inserted into the space; said speed-increasing gear and the rotor of said power generator are disposed inside the hollow space of the cylindrical cam and are attached to the output shaft between the end portion of the shaft body and the end face of said cylindrical cam, said speed-increasing gear being located adjacent to the end portion of the shaft body opposed to the housing and the rotor being located adjacent to the end face of the cylindrical cam and the coil means of said power generator are disposed on the end face of said cylindrical cam adjacent to the rotor.

Since the speed-increasing gear, especially a planetory-type speed increasing gear, and the rotor of the power generator are located inside the cylindrical cam, as described above, the hollow space inside the cylindrical cam, which is not used effectively in the prior art device, can be put to a good use. Accordingly, the power absorbing device may be improved in compactness. Incorporated in the cylindrical cam, moreover, the speed-increasing gear can be assembled integrally with the cam, so that these two components may be removed from or set in the device as one block. Thus, assembly and repair of these components may easily be achieved by incorporating such one block in the device and by replacing it with new one, respectively. Further, by combining the electric generator with the speed-increasing gear in the cylindrical cam, these three components may be assembled or replaced as one united body. Thus, the assembly and repair of the device may additionally be facilitated.

This invention can be more fully understood from the following detailed description when taken in conjunction with the accompanying drawings, in which:

Fig. 1 is a sectional view of a power absorbing device according to an embodiment of this invention;

Fig. 2 is a diagram for illustrating gear combinations in the gear system of a speed-increasing gear used in the device of Fig. 1;

Fig. 3 is a sectional view taken along line 3—3 of Fig. 1; and

Fig. 4 is a sectional view taken along line 4—4 of Fig. 1.

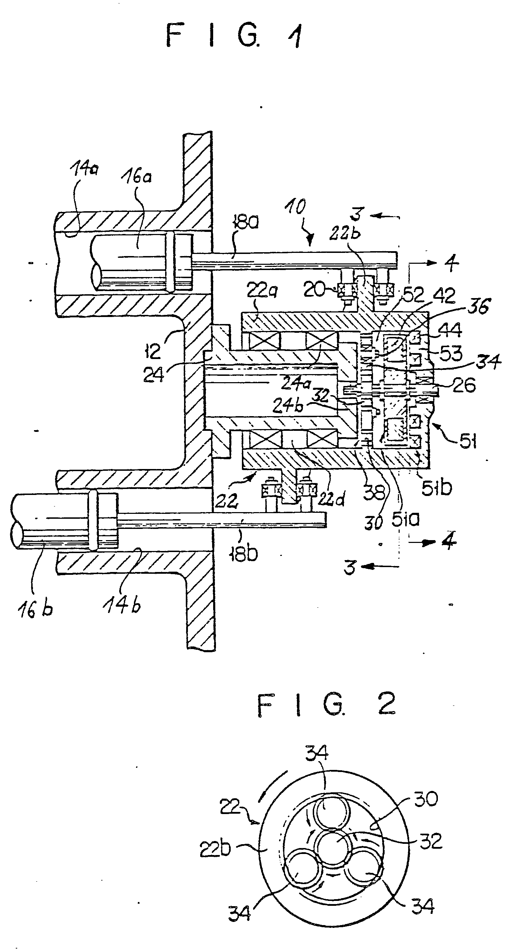

Now there will be described a power absorbing device 10 according to an embodiment of this invention. In Fig. 1, pistons 16a and 16b capable of reciprocating motion are inserted in cylinders 14a and 14b arranged in a housing 12 of a reciprocating adiabatic expansion engine. The tip ends of coupling rods 18a and 18b of the pistons 16a and 16b are coupled with a cylindrical cam 22 by means of bearings 20. The cylindrical cam 22 includes a cylindrical body 22a and annular plate 22b formed on the cylindrical body 22a at an angle thereto and is driven to rotate by the reciprocating motion of the pistons 16a and 16b. Thus, the cylindrical cam 22 serves as a converter to convert reciprocating motion into rotatory motion. A shaft body 24 coaxial with the cylindrical cam 22 protrudes from the housing 12 so that the cylindrical cam 22 is rotatably fitted outside the shaft body 24 by means of bearings 24a. As shown in Fig. 1, the coupling between the pistons 16a and 16b and the cylindrical cam 22 is achieved through the coupling between the tip ends of the pistons 16a and 16b and the annular plate 22b by means of the bearings 20.

An output shaft 26 extending along the axial direction of the cylindrical cam 22 is rotatably attached thereto by means of an end portion 24b of the shaft body 24 and an end face 53 of the cylindrical cam 22. The cylindrical cam 22 has a hollow space 22d therein, and is provided on its inner peripheral surface with an internal gear 30 to rotate together with the cylindrical cam 22. An external gear 32 is fixed on the output shaft 26. Between the internal gear 30 and the external gear 32 as a sun gear, three planet gears 34 formed of external gears in mesh with the gears 30 and 32 are rotatably mounted on fixed shafts 36 which are immovably erected at regular angular intervals on the end portion 24b of the shaft body 24. Fig. 2 shows the relative positions of those gears as viewed from the right of Fig. 1. When the cylindrical cam 22 rotates in the direction of the arrow, i.e., counterclockwise, all the planet gears 34 rotate in the same direction (at this time, the fixed shafts of the planet gears 34 are immovable), while the sun gear 32 rotates clockwise. Hereupon, the speed-increasing gear ratio of a speed-increasing gear 38 including the gears 30, 34 and 32 depends on the gear ratio between the inner gear 30 and the sun gear 32, and the revolving speed of the output shaft 26 is higher than that of the cylindrical cam 22.

Fig. 1 shows a device in which an electric generator 51 as well as the speed-increasing gear 38 are incorporated in the cylindrical cam 22. The cylindrical cam 22 is extended to the right to have a hollow space 52 defined therein. Inside the space 52, a rotor 51a of the electric generator 51 is mounted on the output shaft 26. The rotor 51a is also intended to smooth the rotations of the cylindrical cam 22 and the output shaft 26 and other rotating members lying between them. A plurality of permanent magnets are arranged near the outer circumference of the rotor 51a. In the end face 53 at the right end of the cylindrical cam 22 are disposed electric generating coils 44 which are opposed to the magnets 42 attached to the rotor 51a. In this embodiment, the electric generating coils 44 rotate together with the cylindrical cam 22 in the opposite direction to the rotor 51a, so that the voltage generated from the generating coils 44 must suitably be taken out of the generator 51 by well-known means. Accordingly, by leading out the voltage and suitably applying a load thereto, the mechanical output of the reciprocating adiabatic expansion engine of a low-temperature refrigerating machine can be converted into electric power and absorbed.

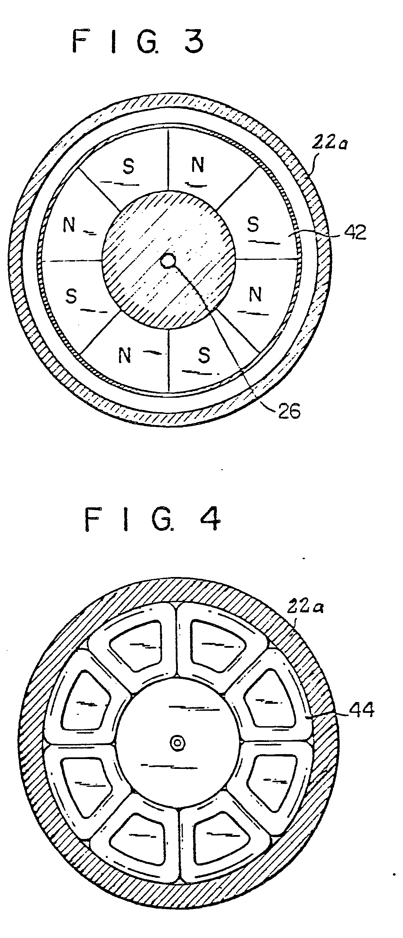

Fig. 3 is a sectional view of the rotor 51a as viewed from the left of Fig. 1. Preferably, the rotor 51a is formed of paramagnetic material with great specific gravity. The rotor 51a is fitted with eight substantially fan-shaped permanent magnets 42 which are magnetized to N and S as viewed from this side of the drawing so that each two adjacent magnetic poles have opposite polarity. In Fig. 1, the magnets 42 are shown as being embedded in the rotor 51a. Alternatively, however, they may be attached to the rotor 51a by bonding, screwing or any other suitable method. Fig. 4 is a sectional view taken along line 4—4 of Fig. 1. As shown in Fig. 4, the coils 44 as many as the permanent magnets 42 are embedded in those positions in the end face 53 of the cam 22 which are substantially opposed to the zones in which the magnets 42 are arranged. Thus, in such arrangement, the rotor 51a and the permanent magnets 42 constitute the rotating part of the electric generator 51, and the electric generating coils 44 constitute the electric generating section 51b of the electric generator 51.

In the power absorbing device 10 of the invention with the above-mentioned construction, the speed-increasing gear 38 is contained in the hollow space 22d inside the cylindrical cam 22. Accordingly, the hollow space 22d, which is not used effectively in the prior art device, can be put to a good use, leading to a reduction in size of the apparatus. With use of the planetary gear mechanism, the speed-increasing gear can be formed of rotating members with their rotating shafts capable of rotating in the same direction as the cylindrical cam 22. Therefore, the gear mechanism between the cylindrical cam 22 and the output shaft 26 can be simplified, and the speed-increasing gear can be made compact enough to be contained in the cylindrical cam 22. Moreover, the rotor 51a functions as a flywheel and as the rotor of the electric generator 51, and is subjected to a braking force if a load current is passed through the electric generating coils 44. Thus, the mechanical power generated from the adiabatic expansion engine can be electrically absorbed without producing any substantial heat at the rotor 51a.

The device shown can easily be assembled and repaired, since the electric generator 51 as well as the speed-increasing gear 38 is contained in the cylindrical cam 22.

## Claims

1. A power absorbing device for absorbing output power in a reciprocating adiabatic expansion engine comprising:

a cylindrical cam (22) which is connected through coupling rods (18a, 18b) to a plurality of parallel pistons (16a, 16b) of the engine and rotates by the reciprocating motion of the pistons (16a, 16b), the rotation axis of said cylindrical cam (22) being substantially parallel to the direction of the reciprocating motion of the pistons, said cylindrical cam (22) having on its outer periphery a swash plate (22b) engaging with the coupling rods (18a, 18b);

bearing means (24, 24a) for rotatably supporting said cylindrical cam (22);

a speed-increasing gear (38) coupled with said cylindrical cam and having an output shaft (26) which is rotated at a higher speed than said cylindrical cam (22), the output shaft (26) extending in substantially a coaxial manner relative to said cylindrical cam (22); and

a power generator (51) having a rotor (51a) which is attached to the output shaft (26) and generates a rotating magnetic field and coil means (44) which interlink with the magnetic field and generate electric power;

characterized in that

the cylindrical cam (22) comprises a cylindrical hollow space (22d) formed substantially coaxial with said cam (22), the speed-increasing gear (38) being arranged in said hollow space (22d);

said bearing means (24, 24a) is attached to the housing (12) of the engine and extends coaxially with said cylindrical cam (22) in the same direction in which the coupling rods (16a, 16b) extend from the engine, said bearing means being comprised of a shaft body (24) having an end portion (24b) at the end opposed to the housing and bearings (24a) fitted on the shaft body (24);

the end region of the hollow space (22d) of said cam opposed to the housing is closed by an end face (53) of said cylindrical cam (22) and the end region of the hollow space (22d) of said cam facing the housing is open, whereby said bearing means (24, 24a) can be inserted into the space (22d);

said speed-increasing gear (38) and the rotor (51a) of said power generator (51) are disposed inside the hollow space of the cylindrical cam and are attached to the output shaft (26) between the end portion (24b) of the shaft body (24) and the end face (53) of said cylindrical cam (22), said speed-increasing gear (38) being located adjacent to the end portion (24b) of the shaft body opposed to the housing and the rotor (51a) being located adjacent to the end face (53) of the cylindrical cam; and

the coil means (44) of said power generator (51) are disposed on the end face (53) of said cylindrical cam (22) adjacent to the rotor (51a).

2. A power absorbing device according to claim 1, characterized in that the output shaft (26) is rotatably supported by the end portion (24b) of the shaft body (24) and the end portion (22c) of said cylindrical cam (22).

## Revendications

1. Dispositif d'absorption d'énergie destiné à absorber une puissance de sortie dans un moteur alternatif à détente adiabatique, comprenant:

— une came cylindrique (22) qui est reliée par des tiges d'accouplement (18a, 18b) à une pluralité de pistons parallèles (16a, 16b) du moteur et qui tourne sous l'effet du mouvement alternatif des pistons (16a, 16b), l'axe de rotation de ladite came cylindrique (22) étant sensiblement parallèle à la direction du mouvement relatif des pistons, ladite came cylindrique (22) présentant sur sa périphérie extérieure un plateau oscillant (22b) qui coopère avec les tiges d'accouplement (18a, 18b);

— des moyens de portée (24, 24a) destinés à supporter ladite came cylindrique (22) en rotation;

— un mécanisme multiplicateur de vitesse (38) couplé à ladite came cylindrique et possédant un arbre de sortie (26) qui est entraîné en rotation à une vitesse supérieure à celle de ladite came cylindrique (22), l'arbre de sortie (26) s'étendant dans une disposition sensiblement coaxiale à ladite came cylindrique (22); et

— un générateur de puissance (51) possédant un rotor (51a) qui est fixé à l'arbre de sortie et engendre un champ magnétique tournant, et des moyens formant bobines (44) qui coopèrent avec le champ magnétique et engendrent une puissance électrique,

caractérisé en ce que la came cylindrique (22) comprend une cavité cylindrique (22*d*) sensiblement coaxiale à ladite came (22), le mécanisme multiplicateur de vitesse (38) étant agencé dans ladite cavité (22*d*);

lesdits moyens de portée (24, 24a) sont fixés au carter (12) du moteur et s'étendent coaxialement à ladite came cylindrique (22), dans le même sens que celui dans lequel les tiges d'accouplement (16a, 16b) émergent du moteur, lesdits moyens de portée étant constitués par un corps d'arbre (24) ayant une partie d'extrémité (24b) située à l'extrémité qui est à l'opposé du carter, et des paliers (24a) montés sur le corps d'arbre (24);

la région d'extrémité de la cavité (22*d*) de ladite came qui est à l'opposé du carter est fermée par une face d'extrémité (53) de ladite came cylindrique (22), et la région d'extrémité de la cavité (22*d*) de ladite came qui regarde vers le carter est ouverte, de sorte que lesdits moyens de portée (24, 24a) peuvent être insérés dans ladite cavité (22*d*);

ledit mécanisme multiplicateur de vitesse (38) et le rotor (51a) dudit générateur de puissance (51) sont disposés à l'intérieur de la cavité de la came cylindrique et sont fixés à l'arbre de sortie (26), entre la partie d'extrémité (24b) du corps d'arbre (24) et la face d'extrémité (53) de ladite came cylindrique (22), ledit mécanisme multiplicateur de vitesse (38) étant placé adjacent à la partie d'extrémité (24b) du corps d'arbre qui est à l'opposé du carter et le rotor (51a) étant placé adjacent à la face d'extrémité (53) de la came cylindrique; et

les moyens formant bobines (44) dudit générateur de puissance (51) sont disposés sur la face d'extrémité (53) de ladite came cylindrique (22) qui est adjacent au rotor (51a).

2. Dispositif d'absorption de puissance selon la revendication 1, caractérisé en ce que l'arbre de sortie (26) est supporté en rotation par la partie d'extrémité (24b) du corps d'arbre (24) et par la partie d'extrémité (22c) de ladite came cylindrique (22).


**Patentansprüche**

1. Einrichtung zur Energieabsorption zum Absorbieren von Ausgangsenergie oder -leistung bei einer adiabatischen Hubkolben-Expansionsmaschine, umfassend

eine zylindrische (Steuer-)Kurve (22), die über Koppel- oder Pleuelstangen (18a, 18b) mit mehreren parallelen Kolben (16a, 16b) der Maschine verbunden und unter der Hubbewegung der Kolben (16a, 16b) in Drehung versetzbar ist, wobei die Drehachse der zylindrischen Kurve (22) im wesentlichen parallel zur Richtung der (hin- und hergehenden) Hubbewegung der Kolben liegt und die zylindrische Kurve (22) an ihrem Außenumfang eine mit den Pleuelstangen (18a, 18b) zusammengreifende Taumelscheibe (22b) aufweist,

Lagermittel (24, 24a) zur drehbaren Lagerung der zylindrischen Kurve (22),

ein mit der zylindrischen Kurve gekoppeltes Drehzahlerhöhungsgetriebe (38) mit einer Abtriebswelle (26), die sich mit höherer Drehzahl dreht als die zylindrische Kurve (22) und die sich im wesentlichen koaxial zur zylindrischen Kurve (22) erstreckt, und

einen Energie- oder Stromgenerator (51) mit einem Rotor (51a), der mit der Abtriebswelle (26) verbunden ist und ein rotierendes Magnetfeld erzeugt, sowie Spuleneinheiten (44), die an das Magnetfeld angekoppelt sind und elektrischen Strom erzeugen, dadurch gekennzeichnet, daß

die zylindrische Kurve (22) einen im wesentlichen koaxial zu ihr ausgebildeten zylindrischen Hohlraum (22d) aufweist, in welchem das Drehzahlerhöhungsgetriebe (38) angeordnet ist,

die Lagermittel (24, 24a) am Gehäuse (12) der Maschine angebracht sind und sich koaxial zur zylindrischen Kurve (22) in derselben Richtung erstrecken, in welcher die Pleuelstangen (16a, 16b) von der Maschine ausgehen, wobei die Lagermittel einen Wellenkörper (24) mit einem Endabschnitt (24b) an dem dem Gehäuse gegenüberliegenden Ende sowie auf den Wellenkörper (24) aufgesetzte Lager (24a) umfassen,

der dem Gehäuse gegenüberliegende (von ihm abgewandte) Endbereich des Hohlraums (22d) der Kurve durch eine Stirnfläche (53) der zylindrischen Kurve (22) verschlossen und der dem Gehäuse zugewandte Endbereich des Hohlraums (22d) der Kurve offen ist, so daß die Lagermittel (24, 24a) in den Hohlraum (22d) einbringbar sind,

das Drehzahlerhöhungsgetriebe (3) und der Rotor (51a) des Stromgenerators (51) innerhalb des Hohlraums der zylindrischen Kurve angeordnet und mit der Abtriebswelle (26) zwischen dem Endabschnitt (24b) des Wellenkörpers (24) und der Stirnfläche (53) der zylindrischen Kurve (22) verbunden sind, wobei das Drehzahlerhöhungsgetriebe (38) neben dem dem Gehäuse gegenüberliegenden Endabschnitt (24b) des Wellenkörpers und der Rotor (51a) neben der Stirnfläche (53) der zylindrischen Kurve angeordnet sind, und

die Spuleneinheiten (44) des Stromgenerators (51) an der Stirnfläche (53) der zylindrischen Kurve (22) neben dem Rotor (51a) angeordnet sind.

2. Einrichtung zur Energieabsorption nach Anspruch 1, dadurch gekennzeichnet, daß die Abtriebswelle (26) mittels des Endabschnitts (24b) des Wellenkörpers (24) und des Endabschnitts (22c) der zylindrischen Kurve (22) drehbar gelagert ist.

# F I G. 1

# F I G. 2

1

# F I G. 3

# F I G. 4